# FASCICULE DE BREVET EUROPEEN

(11) **EP 3 442 725 B1**
(45) Date de publication et mention de la délivrance du brevet: **13.10.2021**
(21) Numéro de dépôt: 17717193.1
(22) Date de dépôt: 14.04.2017
(51) Int. Cl.: B21F 3/02, B21F 11/00, G01B 11/08

(54) **PROCEDES DE FABRICATION D'UN RESSORT, D'UN FREIN A RESSORT, ET FREIN A RESSORT COMPRENANT UN RESSORT**
VERFAHREN ZUR HERSTELLUNG EINER FEDER, FEDERBREMSE UND FEDERBREMSE MIT EINER FEDER
METHODS FOR MANUFACTURING A SPRING, A SPRING BRAKE, AND A SPRING BRAKE COMPRISING A SPRING

(30) Priorité: 15.04.2016 FR 1653351
(43) Date de publication de la demande: 20.02.2019
(73) Titulaire: Somfy Activites SA, 74300 Cluses (FR)
(72) Inventeur: LAGARDE, Eric, 74700 SALLANCHES (FR)
(74) Mandataire: Lavoix
(86) Numéro de dépôt international: PCT/EP2017/059072
(87) Numéro de publication internationale: WO 2017/178654

(56) Documents cités:
- EP-A1- 2 230 415
- EP-A2- 0 278 865
- FR-A1- 2 244 581
- JP-A- 2003 136 171
- US-A- 5 477 715
- US-A1- 2006 230 803
- US-A1- 2011 214 467

## Description

La présente invention concerne un procédé de fabrication d'un ressort, un procédé de fabrication d'un frein à ressort, et un frein à ressort comprenant un ressort. Ce frein à ressort appartient, par exemple, à un motoréducteur de volet roulant, de store, ou plus généralement d'écran domotique.

EP-A1-2 230 415 et EP-A1-2 267 330 décrivent chacun un actionneur électrique d'entraînement d'un écran domotique, l'actionneur électrique étant muni d'un frein à ressort comportant un ressort hélicoïdal et un tambour de friction contre lequel le ressort appuie radialement. Le frein comporte également :
- une pièce d'entrée, laquelle est reliée d'une part à un moteur d'entraînement et d'autre part à une première patte du ressort, de façon à pouvoir entrainer en rotation ce ressort dans un sens de diminution de l'effort de contact entre le ressort et le tambour de friction, et
- une pièce de sortie reliée à la fois à une deuxième patte du ressort et à l'écran.

EP-A2-0 976 909 décrit un actionneur similaire, dans lequel, le ressort hélicoïdal, au lieu d'exercer un effort radial externe de friction sur un tambour, exerce un effort de friction radial interne sur un moyeu, qui s'étend à l'intérieur des spires de ce ressort.

EP 0 278 865 A2 décrit un réducteur-frein pour la manœuvre de volets roulants et similaires. Dans ce réducteur-frein, un ressort hélicoïdal est positionné de manière que ses extrémités soient interposées entre les portées en regard de parties en demi-lune.

Cependant, les freins à ressort de l'art antérieur sont susceptibles de générer du bruit, notamment à la descente de l'écran domotique. Une partie au moins de ce bruit est causée par le ressort hélicoïdal du frein, à cause des irrégularités de contact entre les spires et la surface du tambour de friction ou du moyeu de friction.

En conséquence, l'invention se propose de résoudre les inconvénients de l'art antérieur susmentionné en proposant un nouveau procédé de contrôle de conformité d'un ressort, qui permet de contrôler que le ressort est non bruyant.

L'invention a pour objet un procédé de fabrication d'un ressort selon la revendication 1.

Grâce à l'invention, on sépare au moins une spire brute de chaque extrémité de la portion intermédiaire, ce qui permet de réduire le risque de non-conformité du ressort. En effet, en pratique, la conformation du fil brut selon une spirale entraîne généralement des défauts de forme sur les spires brutes extrémales. Comme les portions brutes incluent ces spires extrémales, leur séparation du ressort fabriqué réduit le risque de non-conformité de ce dernier. Le ressort fabriqué est alors exempt de défauts de forme, notamment en ce qui concerne un contour de spire extérieur et/ou intérieur des spires, qui est destiné à être en contact de friction avec l'organe de friction du frein à ressort. On peut donc réaliser un frein à ressort non bruyant, car les éventuels défauts de forme du ressort, qui sont en partie à l'origine du bruit du frein à ressort dans l'état de la technique, ont été évacués.

D'autres caractéristiques optionnelles et avantageuses de l'invention sont définies dans les revendications 2 à 9.

L'invention a également pour objet un procédé de fabrication d'un frein à ressort selon la revendication 10.

L'invention a également pour objet un frein à ressort selon la revendication 11.

D'autres caractéristiques optionnelles et avantageuses de l'invention sont définies dans les revendications 12 et 14.

L'invention sera mieux comprise à la lecture de la description qui va suivre, donnée uniquement à titre d'exemple non limitatif et faite en se référant aux dessins dans lesquels :
- La figure 1 est une vue de face d'un ressort de frein à ressort conforme à l'invention, sur laquelle un premier et un deuxième mode de réalisation de l'invention sont représentés ;
- La figure 2 est une vue de côté du ressort de la figure 1, dont une zone est coupée selon le trait A-A de la figure 1 ;
- La figure 3 est une vue de face d'une spire appartenant au ressort des figures 1 et 2;
- La figure 4 est un détail de la figure 3, selon le cercle IV, pour le premier mode de réalisation de l'invention ;
- La figure 5 est un détail de la figure 3, selon le cercle V, pour le deuxième mode de réalisation de l'invention ;
- Les figures 6 et 7 sont des vues similaires respectivement, aux figures 1 et 2, du ressort des figures 1 à 4 en cours de fabrication ;
- La figure 8 est une vue éclatée d'un frein à ressort conforme à l'invention ; et
- La figure 9 est une coupe du frein à ressort de la figure 8, représenté assemblé.

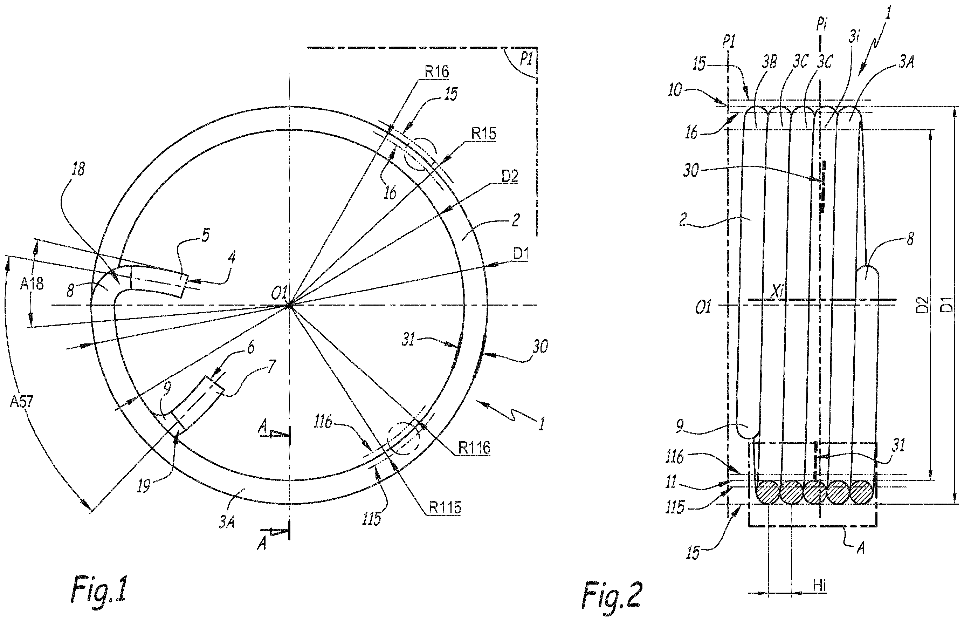

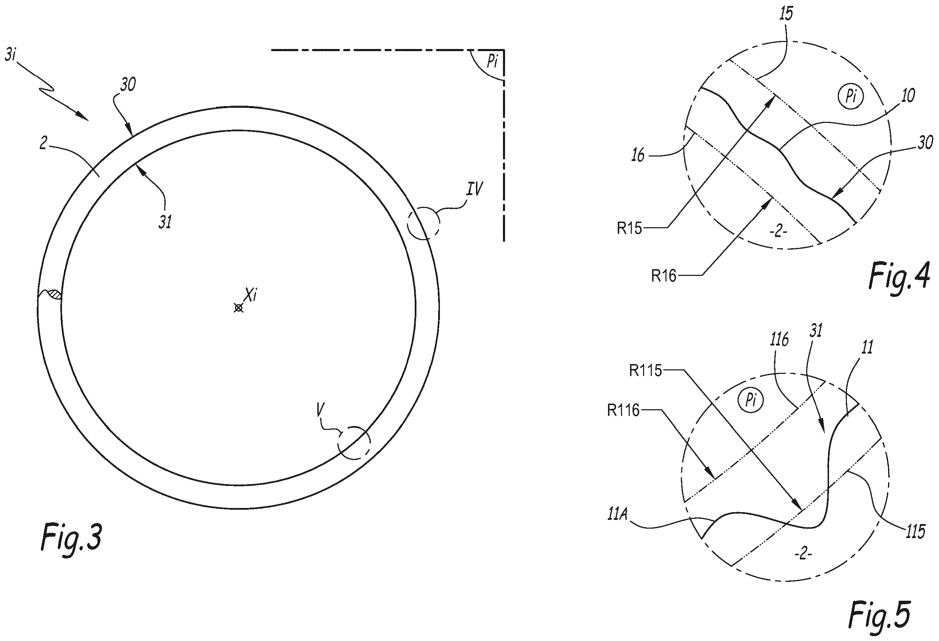

Le ressort 1 représenté aux figures 1 et 2 comprend un fil 2 conformé selon une spirale, c'est-à-dire enroulé en hélice. Le fil 2 est ainsi enroulé selon une pluralité de spires 3i inclues dans la spirale. La spirale est prévue pour être coaxiale avec un axe principal O1 commun du ressort 1, de sorte que chaque spire 3i est sensiblement centrée sur cet axe principal O1. Chaque spire 3i définit un axe de spire Xi avec lequel la spire 3i en question est coaxiale, tel qu'illustré sur les figures 2 et 3. Lorsque l'on fabrique le ressort 1, on souhaite que l'axe de spire Xi de chaque spire soit idéalement coaxial avec l'axe principal O1, ce qui n'est pas nécessairement le cas en pratique, du fait d'éventuelles imperfections du ressort 1. La spirale du ressort 1 est prévue pour s'étendre selon un cylindre droit à base circulaire coaxial avec l'axe principal O1.

Par « spire », on entend une portion du fil 2, qui est inclue dans la spirale du ressort 1, et qui s'étend de façon coaxiale avec l'axe de spire Xi propre à la spire 3i concernée, tout en décrivant un enroulement sur un secteur angulaire de 360° (degrés) autour de l'axe Xi.

En pratique, chaque spire 3i définit un pas Hi, le long de l'axe O1, représenté sur la figure 2. Dans cet exemple, le ressort est conçu pour que la moyenne des pas Hi des spires 3i présente une valeur d'environ 1,9 mm (millimètres).

Le fil 2 définit, pour chaque spire 3i de sa spirale, une courbe directrice externe 30 et une courbe directrice interne 31, une seule des courbes directrices externes 30 et une seule de ces courbes directrices internes 31 étant représentées sur les figures. On définit également, pour chaque spire 3i :
- un plan de spire Pi orthogonal à l'axe de spire Xi de la spire 3i concernée,
- un contour de spire extérieur 10, correspondant à une projection selon l'axe Xi, dans le plan Pi, de la courbe directrice externe 30 de la spire 3i concernée, et
- un contour de spire intérieur 11, correspondant à une projection selon l'axe Xi, dans le plan Pi, de la courbe directrice interne 31 de la spire 3i concernée.

Un seul de ces contours de spire extérieur 10, un seul de ces contours de spire intérieur 11, un seul de ces plans Pi et un seul de ces axes Xi sont représentés sur les figures.

On conçoit le ressort 1 pour que les contours 10 et 11 ainsi définis soient circulaires et centrés sur l'axe Xi de la spire 3i concernée. En réalité, les contours 10 et 11 ne présentent pas une forme parfaitement circulaire, comme illustré schématiquement sur les figures 4 et 5.

Le ressort 1 est fabriqué de façon à présenter un diamètre extérieur D1 prédéterminé, correspondant au diamètre moyen des courbes directrices externes 30. On définit également un diamètre intérieur D2, correspondant au diamètre moyen des courbes directrices internes 31.

Comme illustré sur la figure 2, les spires 3i du ressort 1 sont préférentiellement jointives, c'est-à-dire que le fil 2 d'une première spire 3i est en contact sur toute la circonférence de la spire avec le fil 2 d'une deuxième spire 3i adjacente à la première spire 3i.

Dans l'exemple illustré aux figures 1 et 2, l'enroulement des spires 3i est à gauche. Alternativement, l'enroulement des spires 3i est à droite.

On définit un plan de projection théorique P1 orthogonal à l'axe O1 et visible sur les figures 1 et 2.

Le fil 2 présente une première extrémité 4 et une deuxième extrémité 6 opposée à la première extrémité 4.

Une première partie extrémale du fil 2, laquelle s'étend à partir de la première extrémité 4, hors de la spirale du ressort 1, est conformée selon une première patte 5, visible sur la figure 1. Une deuxième partie extrémale du fil 2, laquelle s'étend à partir de la deuxième extrémité 6, hors de la spirale du ressort 1, est conformée selon une deuxième patte 7. La première patte 5 et la deuxième patte 7 sont chacune dirigées, selon une direction sensiblement radiale, selon un premier mode de réalisation, vers l'intérieur du ressort 1, en particulier en direction de l'axe principal O1. Les pattes 5 et 7 définissent entre elles un angle de pattes A57 par rapport à l'axe O1, en projection dans le plan de projection P1. En projection dans le plan P1, les pattes 5 et 7 sont légèrement recourbées en direction l'une de l'autre. Chaque patte 5 et 7 s'étend dans un plan orthogonal à l'axe O1. La forme particulière des pattes 5 et 7 est obtenue selon le procédé de fabrication particulier du ressort décrit plus bas. En pratique, la courbure des pattes 5 et 7 correspond sensiblement à la courbure des spires 3i.

La patte 5 s'étend entre la première extrémité 4 et une première pliure 8 du fil 2, à partir de laquelle débute une première spire extrémale 3A du fil 2. La patte 7 s'étend entre la deuxième extrémité 6 et une deuxième pliure 9 du fil 2, à partir de laquelle débute une deuxième spire extrémale 3B du fil 2, opposée à la première spire extrémale 3A. En d'autres termes, les pliures 8 et 9 délimitent la spirale du ressort 1. Les spires 3i s'étendant entre les spires extrémales 3A et 3B sont désignées « spires intermédiaires 3C ».

Le ressort 1 est un ressort de torsion, qui est conçu pour interagir avec des organes exerçant des couples, autour de l'axe principal O1, ces couples étant appliqués en particulier sur les pattes 5 et 7.

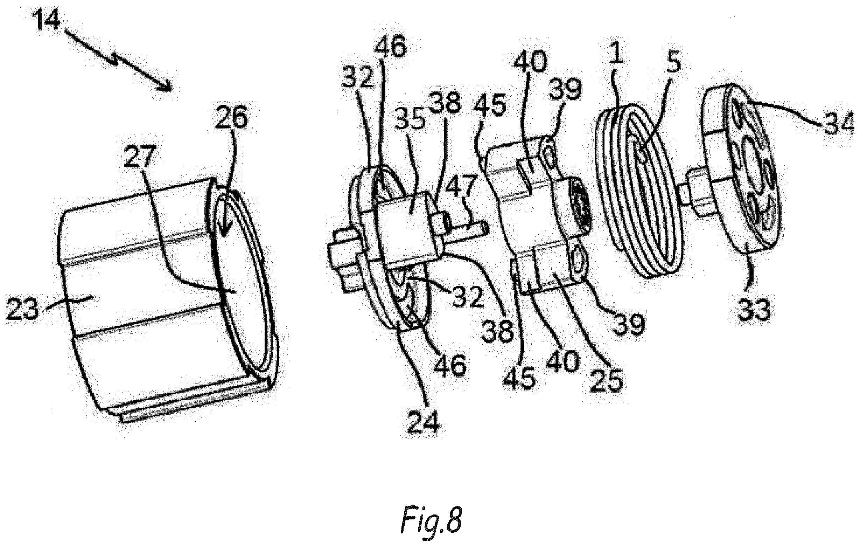

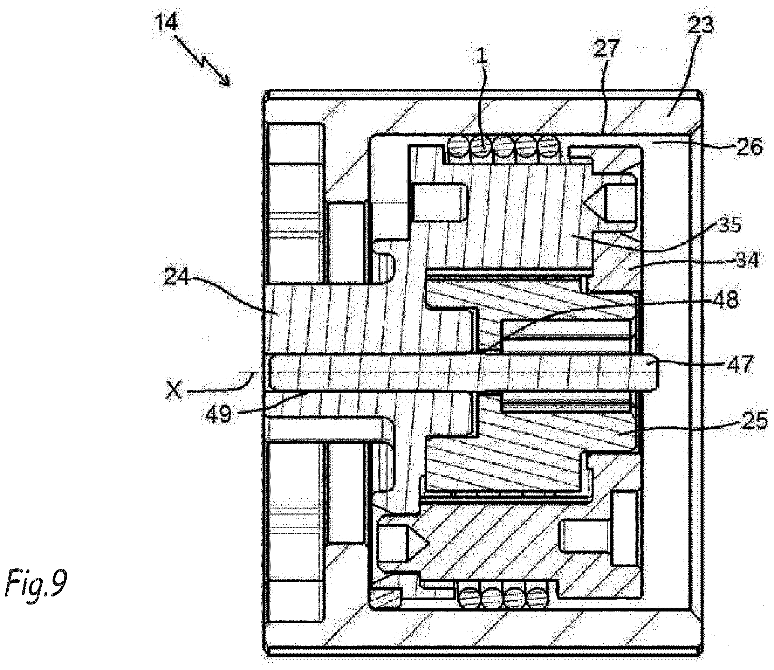

Le ressort 1 du premier mode de réalisation est conçu pour être monté au sein d'un frein à ressort 14, tel qu'illustré sur les figures 8 et 9, et pour être en contact de friction radiale avec un organe de friction du frein à ressort. En pratique, c'est tout ou partie de la spirale du fil 2 qui est en contact de friction. Plus précisément, le fil 2 est en contact de friction au niveau de tout ou partie des courbes directrices externes 30 des spires 3i.

Dans le premier mode de réalisation, l'organe de friction du frein à ressort 14 est constitué, par exemple, par un tambour 23 de forme annulaire dans lequel le ressort 1 est conçu pour être logé, de manière à pouvoir exercer un effort de friction par augmentation du diamètre extérieur D1, comme c'est le cas dans EP-A1-2 230 415 et EP-A1-2 267 330. Dans ce cas, le ressort 1 est un ressort dit « écartant ».

Ainsi, le frein à ressort 14 comprend au moins un ressort 1, un tambour 23, un organe d'entrée 24 et un organe de sortie 25.

Le tambour 23 comporte un logement 26. Ici, le logement 26 du tambour 23 est de forme cylindrique. Le ressort 1, l'organe d'entrée 24 et l'organe de sortie 25 sont disposés à l'intérieur du logement 26 du tambour 23, dans la configuration assemblée du frein à ressort 14. L'organe de sortie 25 est disposé en vis-à-vis de l'organe d'entrée 24.

Ici, le ressort 1 comporte une pluralité de spires. Les spires du ressort 1 sont centrées sur un axe confondu avec l'axe de rotation X, lorsque le frein à ressort 14 est assemblé puis monté dans un actionneur électrique (non représenté). De même, l'organe d'entrée 24 et l'organe de sortie 25 sont centrés sur un axe confondu avec l'axe de rotation X, lorsque le frein à ressort 14 est assemblé puis monté dans l'actionneur électrique.

Une surface interne de frottement 27 du logement 26 du tambour 23 est configurée pour coopérer avec au moins une spire du ressort 1. De cette manière, au moins une spire du ressort 1 est contrainte radialement par le logement 26 du tambour 23.

Ici, le ressort 1 est monté serrant à l'intérieur du logement 26 du tambour 23, de sorte à solidariser par friction le ressort 1 et le tambour 23, lorsque le ressort 1 est au repos.

Chaque extrémité du ressort 1 forme une patte 5, 7 s'étendant radialement ou axialement par rapport à l'axe de rotation X du frein à ressort 14.

Dans l'exemple de réalisation illustré aux figures 1 à 9, les pattes 5, 7 du ressort 1 s'étendent radialement par rapport à l'axe de rotation X du frein à ressort 14 et vers l'intérieur du ressort 1, notamment à partir des spires du ressort 1 vers l'axe central du ressort 1.

L'organe d'entrée 24 est entraîné en rotation par un moteur électrique (non représenté). Dans l'exemple de réalisation illustré, l'organe d'entrée 24 comprend une dent d'entraînement 35, montée sur un premier plateau 32 de l'organe d'entrée. La dent d'entraînement 35 de l'organe d'entrée 24 est insérée à l'intérieur du ressort 1, lorsque le frein à ressort 14 est assemblé. La dent d'entraînement 35 de l'organe d'entrée 24 est disposée entre les deux pattes 5, 7 du ressort 1 et coopère avec l'une ou l'autre des pattes 5, 7 du ressort 1, selon le sens de rotation d'entraînement généré par le moteur électrique.

Ici, et tel qu'illustré aux figures 8 et 9, le ressort 1 et l'organe de sortie 25 sont maintenus en position axialement entre le premier plateau 32 de l'organe d'entrée 24 et un deuxième plateau 34 d'un capot 33.

Les premier et deuxième plateaux 32, 34 sont solidaires en rotation autour de l'axe de rotation X du frein à ressort 14. L'organe de sortie 25 permet de transmettre le mouvement vers un écran, par exemple un écran d'occultation ou de protection solaire.

Dans l'exemple de réalisation illustré aux figures 8 et 9, l'organe de sortie 25 comprend deux oreilles 39. Les oreilles 39 de l'organe de sortie 25 sont insérées à l'intérieur du ressort 1, lorsque le frein à ressort 14 est assemblé.

Les oreilles 39 de l'organe de sortie 25 comprennent respectivement un évidement 40. L'évidement 40 de chacune des oreilles 39 de l'organe de sortie 25 est configuré pour coopérer avec l'une des pattes 5 et 7 du ressort 1.

Les oreilles 39 de l'organe de sortie 25 comprennent, en outre, respectivement un élément en saillie 45. L'élément en saillie 45 de chacune des oreilles 39 de l'organe de sortie 25 s'étend parallèlement à l'axe de rotation X du frein à ressort 14, et en particulier vers l'organe d'entrée 24, lorsque le frein à ressort 14 est assemblé. L'élément en saillie 45 de chacune des oreilles 39 de l'organe de sortie 25 est configuré pour coopérer avec une lumière 46 de l'organe d'entrée 24, lorsque le frein à ressort 14 est assemblé.

Dans un mode de réalisation, la face périphérique de l'élément en saillie 45 de l'une des oreilles 39 de l'organe de sortie 25 peut être mise en contact avec le contour de la lumière 46 correspondante de l'organe d'entrée 24, lorsque l'une des faces d'entraînement 38 de la dent d'entraînement 35 de l'organe d'entrée 24 est en contact avec la face de l'oreille 39 correspondante de l'organe de sortie 25.

Ici, et tel qu'illustré aux figures 8 et 9, l'organe de sortie 25 est centré par rapport à l'organe d'entrée 24 au moyen d'un axe 47. L'axe 47 est inséré, d'une part, dans un alésage 48 de l'organe de sortie 25 et, d'autre part, dans un alésage 49 de l'organe d'entrée 24.

L'organe d'entrée 24, en particulier la dent d'entraînement 35, est configurée pour coopérer avec au moins l'une des pattes 5 et 7 du ressort 1, de sorte à entraîner en rotation le ressort 1 autour de l'axe de rotation X du frein à ressort 14 dans un premier sens de rotation.

Un tel mouvement libère le frein à ressort 14.

L'effort de frottement entre au moins une spire du ressort 1 et la surface interne 27 du logement 26 du tambour 23 est diminué lors de l'entraînement en rotation du ressort 1 dans le premier sens de rotation.

Autrement dit, ce mouvement tend à diminuer le diamètre de l'enveloppe externe du ressort 1 et donc à diminuer la contrainte radiale entre le ressort 1 et la surface interne 27 du logement 26 du tambour 23.

Ainsi, le mouvement généré par le moteur électrique peut être transmis de l'organe d'entrée 24 à l'organe de sortie 25.

L'enveloppe externe du ressort 1 est définie par les génératrices externes des spires du ressort 1.

L'organe de sortie 25, en particulier l'une des oreilles 39, est configuré pour coopérer avec l'une au moins des pattes 5, 7 du ressort 1, de sorte à entraîner en rotation le ressort 1 autour de l'axe de rotation X du frein à ressort 14 dans un deuxième sens de rotation.

Un tel mouvement active le frein à ressort 14, c'est-à-dire tend à bloquer ou à freiner la rotation du ressort 1 à l'intérieur du logement 26 du tambour rotatif 23.

L'effort de frottement entre au moins une spire du ressort 1 et la surface interne 27 du logement 26 du tambour 23 est augmenté lors de l'entraînement en rotation du ressort 1 dans le deuxième sens de rotation.

Autrement dit, ce mouvement tend à augmenter le diamètre de l'enveloppe externe du ressort 1, en particulier par le rapprochement des pattes 5 et 7 du ressort 1, et donc à augmenter la contrainte radiale entre le ressort 1 et la surface interne 27 du logement 26 du tambour 23.

Avantageusement, le frein à ressort 14 comprend un premier lubrifiant, non représenté, disposé entre le ressort 1 et la surface interne 27 du logement 26 du tambour 23. Le premier lubrifiant est, préférentiellement, de la graisse.

Ainsi, le ressort 1 est conçu pour évoluer entre un état libre, dans lequel il est représenté aux figures 1 et 2, un état monté et un état contraint. L'état libre correspond à un état dans lequel le ressort n'est lié à aucune autre pièce. Lorsque le ressort 1 est monté au sein du frein à ressort, le ressort 1 est soumis à des contraintes dans cet état monté. L'état contraint correspond à un état dans lequel le ressort est soumis à un couple sur au moins l'une des pattes 5 et 7, ou de manière générale à des contraintes ou des efforts suffisants pour entraîner une déformation élastique du fil 2. Lorsque le ressort 1 passe de l'état libre à l'état contraint ou à l'état monté, le ressort 1 est déformé de sorte que la valeur des diamètres D1 et D2 varie.

A l'état libre, le ressort 1 présente un nombre nominal de spires 3i. En l'espèce, le ressort 1 du présent exemple comprend un nombre nominal de spires 3i compris entre quatre et six spires.

A l'état libre, l'angle de pattes A57 présente une valeur nominale, par exemple environ 56°. A l'état contraint, la valeur de l'angle de pattes A57 diffère de la valeur nominale. Dans cet exemple, le ressort 1 est fabriqué de façon à ce que le diamètre D1 présente une valeur de 32,4 mm, à l'état libre.

Avant d'intégrer ce ressort 1 écartant dans le frein à ressort, on met en œuvre un procédé de contrôle de conformité du ressort 1. Grâce à ce procédé de contrôle, on vérifie que le ressort est exempt de défauts de géométrie, notamment en ce qui concerne le contour de spire extérieur et/ou intérieur des spires, qui est destiné à être en contact de friction avec un organe de friction du frein à ressort. En effet, les éventuels défauts de géométrie du ressort, qui peuvent notamment être causés par le procédé de fabrication du ressort, sont au moins en partie à l'origine du bruit du frein à ressort. Ainsi, le ressort peut être contrôlé avant d'être intégré au frein à ressort, ce qui permet notamment de réaliser un frein à ressort non bruyant par mise en œuvre seulement d'un ressort conforme.

Ce procédé de contrôle de conformité comprend une étape principale de vérification de la circularité des spires 3i. Pour cela, on définit pour chaque spire 3i un cercle extérieur de tolérance 15, parfait, et présentant un rayon R15, dit rayon extérieur. Pour chaque spire 3i, on trace ce cercle 15 dans le plan de spire Pi en le centrant sur l'axe de spire Xi, comme illustré sur les figures 2 et 4. On définit également, pour chaque spire 3i, un cercle intérieur de tolérance 16, parfait, et présentant un rayon R16, dit rayon intérieur. Sur la figure 1, une portion seulement des cercles 15 et 16 est représentée. Le rayon intérieur R16 est de valeur inférieure à celle du rayon extérieur R15 d'une valeur d'intervalle de tolérance prédéterminée. En d'autres termes, la valeur d'intervalle de tolérance prédéterminée est égale à la valeur absolue de la différence entre la valeur du rayon intérieur R16 et celle du rayon extérieur R15. Pour chaque spire 3i, on trace ce cercle 16 dans le plan de spire Pi en le centrant sur l'axe de spire Xi, comme illustré sur les figures 2 et 4. Pour des raisons de clarté du tracé, les rayons R15 et R16 des cercles 15 et 16 ne sont pas représentés à l'échelle sur les figures 1 et 2.

Dans cet exemple d'un ressort 1 écartant, la valeur d'intervalle de tolérance est comprise entre 0,05 et 0,15 millimètres, de préférence égale à 0,10 millimètres.

Dans le cas du ressort 1 écartant du premier mode de réalisation, comme illustré sur la figure 4, on vérifie, par exemple à l'aide d'une machine à mesurer tridimensionnelle ou tout autre outil métrologique adapté, qu'une portion choisie du contour de spire extérieur 10 de chaque spire 3i, est comprise entre le cercle extérieur de tolérance 15 et le cercle intérieur de tolérance 16. Sur la figure 4, cette condition est vérifiée. Vérifier cette condition revient à vérifier la circularité de chaque spire 3i. Cette vérification est effectuée alors que le ressort 1 est à l'état libre. En pratique, on vérifie pour chaque spire 3i concernée, qu'il n'existe pas un point de la portion choisie du contour 10, positionné à l'extérieur du cercle 15 ou à l'intérieur du cercle 16. Si cette condition est vérifiée, on caractérise, c'est-à-dire que l'on considère, que le ressort 1 écartant est conforme et peut être intégré au frein à ressort. Si cette condition est vérifiée, on a l'assurance, avant montage du ressort 1 dans le frein à ressort, que le frein à ressort est non bruyant une fois le ressort 1 monté. Si cette condition n'est pas vérifiée, c'est-à-dire si la portion choisie du contour de spire 10 d'au moins l'une des spires 3i dépasse, radialement à l'axe Xi, vers l'extérieur du cercle 15 ou vers l'intérieur du cercle 16 en au moins un point, on caractérise que le ressort 1 est non conforme et qu'il est susceptible de produire du bruit lorsqu'intégré au frein à ressort.

La portion choisie du contour de spire extérieur 10 correspond préférentiellement à la portion d'une spire destinée à être en contact de friction avec l'organe de friction du frein à ressort.

La portion choisie de chaque spire 3i peut s'étendre sur une portion seulement de la spire 3i concernée, par exemple sur une portion de 90° de la spire 3i. Alternativement, on définit plusieurs portions choisies par spire 3i, la réunion des portions choisies couvrant la totalité de la spire 3i concernée. De préférence, on définit une seule portion choisie par spire 3i, qui s'étend sur la totalité de la spire 3i concernée. De façon préférentielle, on vérifie que toute portion choisie du contour 10 de chaque spire 3i est comprise entre les cercles 15 et 16, lorsque le ressort 1 est à l'état libre. Si cette condition n'est pas vérifiée, c'est-à-dire si au moins une portion choisie n'est pas comprise entre les cercles 15 et 16, on caractérise le ressort 1 comme étant non conforme.

Une première portion exclue 18, visible sur la figure 1, s'étend à partir de la première extrémité 4 du fil 2 et par-delà la pliure 8 de ce dernier. La première portion exclue 18 s'étend sur un secteur angulaire A18, visible sur la figure 1, défini par rapport à l'axe O1 et s'étendant entre un bord extrémal de la patte 5 jusqu'à un point de la première spire extrémale 3A, préférentiellement en bordure de la pliure 8. La première portion exclue 18 s'étend ainsi sur une portion seulement de la première spire extrémale 3A, et inclut également la pliure 8 et la patte 5. Dans cet exemple, le secteur angulaire A18 vaut 15°. Une deuxième portion exclue 19 s'étend à partir de la deuxième extrémité 6 du fil 2 et par-delà la pliure 9 de ce dernier. La deuxième portion exclue 19 s'étend sur un secteur angulaire similaire au secteur A18, non illustré. Le secteur angulaire de la portion exclue 19 est défini par rapport à l'axe O1 et s'étend entre un bord extrémal de la patte 7 jusqu'à un point de la deuxième spire extrémale 3B. La deuxième portion exclue 19 s'étend ainsi sur une portion seulement de la deuxième spire extrémale 3B, et inclut également la pliure 9 et la patte 7. Dans cet exemple, le secteur angulaire de la portion exclue 19 vaut également 15°. De préférence, on exclut de la vérification des portions exclues 18 et 19 du fil 2, définies dans ce qui suit. En d'autres termes, les portions choisies des spires extrémales 3A et 3B ne couvrent pas les portions exclues 18 et 19, respectivement.

Dans un second mode de réalisation, tout ou partie des courbes directrices internes 31 du ressort 1 est configurée pour être en contact de friction radial interne avec l'organe de friction du frein à ressort. Dans ce cas, l'organe de friction constitue par exemple un moyeu autour duquel le ressort 1 est conçu pour être monté, de manière à pouvoir exercer un effort de friction par réduction du diamètre intérieur D2, comme c'est le cas dans EP-A2- 0 976 909. Dans ce cas, le ressort 1 est un ressort dit « serrant ».

Avant d'intégrer ce ressort 1 serrant dans le frein à ressort, on met en œuvre un procédé de contrôle de conformité du ressort 1 similaire à celui décrit pour le cas du ressort 1 écartant, mais appliqué au contour intérieur 11.

Plus précisément, on définit un cercle extérieur de tolérance 115, parfait, pour chaque spire 3i, présentant un rayon R115, dit rayon extérieur. Pour chaque spire 3i, on trace ce cercle 115 dans le plan de spire Pi en le centrant sur l'axe de spire Xi, comme illustré sur les figures 2 et 5. On définit également un cercle intérieur de tolérance 116, parfait, pour chaque spire 3i, présentant un rayon R116, dit rayon intérieur. Le rayon intérieur R116 est de valeur inférieure à celle du rayon extérieur R115 d'une valeur d'intervalle de tolérance prédéterminée. En d'autres termes, la valeur d'intervalle de tolérance prédéterminée est égale à la valeur absolue de la différence entre la valeur du rayon intérieur R116 à celle du rayon extérieur R115. Sur la figure 1, une portion seulement des cercles 115 et 116 est représentée. Pour chaque spire 3i, on trace le cercle 116 dans le plan de spire Pi en le centrant sur l'axe de spire Xi, comme illustré sur les figures 2 et 5. Pour des raisons de clarté du tracé, les rayons R115 et R116 des cercles 115 et 116 ne sont pas représentés à l'échelle sur les figures 1 et 2.

Dans cet exemple d'un ressort 1 serrant, la valeur d'intervalle de tolérance est comprise entre 0,05 et 0,15 millimètres, de préférence égale à 0,10 millimètres.

Dans le cas du ressort 1 serrant, on vérifie, tel qu'illustré sur la figure 5, par exemple à l'aide d'une machine à mesurer tridimensionnelle ou tout autre outil métrologique adapté, qu'une portion choisie du contour de spire intérieur 11 de chaque spire 3i est comprise entre le cercle extérieur de tolérance 115 et le cercle intérieur de tolérance 116. Cette vérification est effectuée alors que le ressort 1 est à l'état libre. En pratique, on vérifie pour chaque spire 3i, qu'il n'existe pas un point de la portion choisie du contour 11, positionné à l'extérieur du cercle 115 ou à l'intérieur du cercle 116. Si cette condition est vérifiée, on caractérise, c'est-à-dire que l'on considère, que le ressort 1 serrant est conforme et peut être intégré au frein à ressort. Si cette condition n'est pas vérifiée, c'est-à-dire si la portion choisie du contour de spire 11 d'au moins une spire 3i dépasse, radialement à l'axe Xi, vers l'extérieur du cercle 115 ou vers l'intérieur du cercle 116 en au moins un point, on caractérise que le ressort 1 est non conforme et qu'il est susceptible de produire du bruit lorsqu'intégré au frein à ressort. Dans le cas d'exemple de la figure 5, cette condition n'est pas vérifiée car un point 11A n'est pas compris entre les cercles 115 et 116. Dans le cas contraire, non illustré où cette condition est vérifiée, on a l'assurance, avant montage du ressort 1 dans le frein à ressort, que le frein à ressort est non bruyant une fois le ressort 1 monté.

La portion choisie du contour de spire intérieur 11 correspond préférentiellement à la portion d'une spire destinée à être en contact de friction avec l'organe de friction du frein à ressort. La portion choisie de chaque spire 3i peut s'étendre sur une portion seulement de la spire 3i concernée, par exemple sur une portion de 90° de la spire 3i. De préférence, au contraire, la portion choisie s'étend sur la totalité de la spire 3i concernée, c'est-à-dire sur les 360° de la spire 3i concernée. De façon préférentielle, on vérifie que toute portion choisie du contour 11 de chaque spire 3i est comprise entre les cercles 115 et 116, lorsque le ressort 1 est à l'état libre, optionnellement à l'exclusion des portions exclues 18 et 19 du fil 2, définies ci-avant. Si cette condition n'est pas vérifiée, c'est-à-dire si au moins une portion choisie du contour 11 n'est pas comprise entre les cercles 115 et 116, on caractérise le ressort 1 comme étant non conforme.

Quel que soit le mode de réalisation considéré, le procédé de contrôle de conformité du ressort 1 est effectué à l'issue d'une étape de fabrication du ressort 1 et avant l'intégration du ressort 1 dans le frein à ressort.

Le procédé de contrôle de conformité peut comprendre d'autres sous-étapes pour caractériser la conformité du ressort 1.

En particulier, dans le cas du premier mode de réalisation, pour caractériser le ressort 1 comme étant conforme, on peut également vérifier la cylindricité du ressort 1 à l'état libre. Plus précisément, on vérifie de préférence qu'au moins une portion choisie, voire la totalité, des courbes directrices externes 30 des spires 3i, à l'exclusion des portions exclues 18 et 19, est comprise entre deux cylindres de tolérance coaxiaux, préférentiellement coaxiaux avec l'axe O1. Les cylindres de tolérances sont théoriques et parfaits, et présentent chacun une base circulaire de rayon différent, la différence des rayons des cylindres de tolérance présentant une valeur d'intervalle de tolérance prédéterminée. Par exemple, cette valeur de tolérance est inférieure à 0,20 mm et de préférence égale à 0,15 mm. On ne caractérise alors le ressort 1 comme étant conforme que si cette condition est vérifiée. Dans le cas contraire où au moins un point des courbes directrices externes 30 n'est pas compris entre les deux cylindres de tolérance, le ressort 1 est alors déclaré comme non conforme. On effectue une démarche similaire dans le cas du deuxième mode de réalisation, en vérifiant que l'ensemble des courbes directrices internes 31 des spires 3i, à l'exclusion des portions exclues 18 et 19, est compris entre deux cylindres de tolérance coaxiaux dont les rayons sont différents d'une valeur de tolérance prédéterminée.

Pour caractériser la conformité du ressort 1, l'absence de rouille, de savon et de graisse sur le ressort 1 peut également être vérifiée. En effet, la rouille, le savon et la graisse peuvent contribuer à la génération de bruit par le ressort 1, de sorte que l'on ne déclare le ressort 1 comme étant conforme seulement si l'absence de ces éléments est vérifiée.

De manière correspondante, on peut également caractériser la conformité de l'organe de friction du frein à ressort destiné à coopérer avec le ressort 1, en particulier en effectuant des vérifications relatives à sa cylindricité, son état de surface, sa dureté et/ou sa matière.

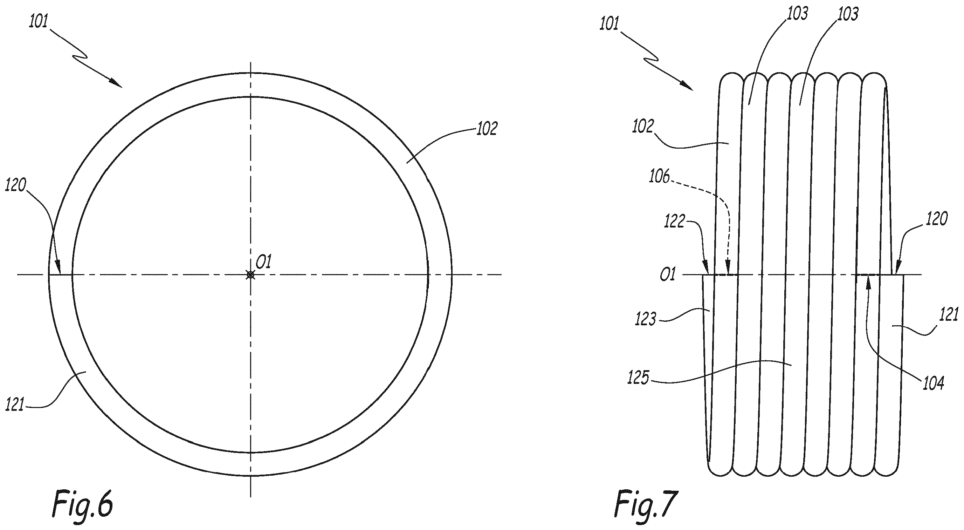

Pour fabriquer le ressort 1, qu'il soit serrant ou écartant, on fournit un fil brut 102, qui est par exemple de forme rectiligne, et que l'on enroule, de façon à conformer ce fil brut 102 selon une pluralité de spires brutes 103 illustrées sur les figures 6 et 7. On forme ainsi une ébauche de ressort 101. Certaines des spires brutes 103 sont destinées à former les spires 3i du ressort 1 une fois la fabrication achevée. Les spires 103 sont conçues pour être coaxiales avec un axe commun O1 représenté sur les figures 6 et 7, correspondant au futur axe principal O1 du ressort 1 représenté sur les figures 1 et 2.

Le fil brut 102 présente une première portion brute 121 s'étendant à partir d'une première extrémité 120 du fil brut 102 jusqu'à une position intermédiaire 104 du fil brut 102. Le fil brut 102 présente également une deuxième portion brute 123 s'étendant à partir d'une deuxième extrémité 122 du fil brut 102, opposée à la première extrémité 120, jusqu'à une position intermédiaire 106 du fil brut 102. La position intermédiaire 106 est représentée en pointillés sur la figure 6, étant placée sur une portion du fil brut 102 non visible sur la figure 6. Dans le présent exemple, la première portion brute 121 et la deuxième portion brute 123 s'étendent chacune sur environ une spire brute 103 complète du fil brut 102. De préférence, les portions brutes 121 et 123 s'étendent sur plus d'une spire brute 103. Les portions brutes 121 et 123 s'étendent avantageusement sur environ 1,25 spire brute 103. Enfin, le fil brut 102 présente une portion intermédiaire 125 s'étendant à partir de la première portion brute 121 jusqu'à la deuxième portion brute 123. En d'autres termes, la portion intermédiaire 125 s'étend depuis la position intermédiaire 104, qui forme une première extrémité de la portion intermédiaire 125, jusqu'à la position intermédiaire 106, qui forme une deuxième extrémité opposée de la portion intermédiaire 125. La longueur de fil brut 102 de la portion intermédiaire 125 est de valeur identique à celle de la longueur du fil 2 du ressort 1, de l'extrémité 4 à l'extrémité 6.

Le procédé de fabrication comprend ensuite une étape de séparation de la première portion brute 121 et de la deuxième portion brute 123 du fil brut 102. Cette séparation est obtenue en coupant le fil brut 102 au niveau des positions intermédiaires 104 et 106. La portion intermédiaire 125 devient alors le fil 2 du ressort 1 d'axe principal O1. Les positions intermédiaires 104 et 106 deviennent respectivement les extrémités 4 et 6. On sépare ainsi au moins une spire brute 103 de chaque extrémité 104 et 106 de la portion intermédiaire 125, ce qui permet avantageusement de réduire le risque de non-conformité du ressort 1. En effet, en pratique, la conformation du fil brut 102 selon une spirale entraîne généralement des défauts de forme sur les spires brutes 103 extrémales. Comme les portions 121 et 123 incluent ces spires extrémales, leur séparation du ressort 1 final réduit le risque de non-conformité de ce dernier.

La fabrication du ressort 1 comporte également :
- une sous-étape de conformation de la première patte 5, à la première extrémité 104, ou position intermédiaire 104, de la portion intermédiaire 125, par pliage du fil brut 102,
- une sous-étape de conformation de la deuxième patte 7, à la deuxième extrémité 106, ou position intermédiaire 106, de la portion intermédiaire 125, par pliage du fil brut 102.

Le pliage des pattes 5 et 7 est effectué par formation des pliures 8 et 9. A l'issue de leur conformation, les pattes 5 et 7 sont alors orientées chacune radialement en direction de l'axe principal O1. La conformation des pattes 5 et 7 est effectuée soit avant soit après la séparation des portions brutes 121 et 123.

En tout état de cause, une portion des spires brutes 103 de la portion intermédiaire 125 devient les spires 3i du ressort 1, deux autres portions des spires brutes 103 devenant respectivement les pattes 5 et 7.

Avantageusement, le procédé de fabrication du ressort 1 comprend une étape de galetage mécanique de la surface extérieure des spires du ressort 1. Le galetage mécanique est un procédé industriel utilisant une technique de polissage à l'aide de galets, permettant de modifier la forme initiale d'une pièce.

Ainsi, le galetage de la surface extérieure des spires du ressort 1 permet de modifier la section du fil formant le ressort 1 et, en particulier, d'aplatir la surface extérieure du ressort 1.

De cette manière, le galetage de la surface extérieure des spires du ressort 1 permet de diminuer la pression de contact d'au moins une spire du ressort 1 sur la surface interne 27 du logement 26 du tambour 23, lors du fonctionnement du frein à ressort 14, par rapport à la pression de contact d'au moins une spire du ressort 1 à section circulaire.

La diminution de pression de contact d'au moins une spire du ressort 1 sur la surface interne 27 du logement 26 du tambour 23 est due à l'augmentation de surface d'au moins une spire du ressort 1 sur la surface interne 27.

Par conséquent, le galetage de la surface extérieure des spires du ressort 1 permet de réduire les bruits de fonctionnement du frein à ressort 14 puisqu'une diminution de la pression de contact d'au moins une spire du ressort 1 sur la surface interne 27 du logement 26 du tambour 23, lors du fonctionnement du frein à ressort 14, facilite la lubrification des zones de contact entre le ressort 1 et la surface interne 27 du logement 26 du tambour 23.

Préférentiellement, suite à l'étape de galetage, le procédé comprend une étape de traitement thermochimique de la surface du ressort 1.

Avantageusement, le traitement de surface thermochimique de la surface du ressort 1 est un traitement de surface thermochimique appelé « DLC » (acronyme de l'expression anglo-saxonne Diamond Like Carbon).

La technique appelée « DLC » consiste à mettre en œuvre un dépôt en couche mince de carbone amorphe, par exemple d'une épaisseur de trois micromètres.

Ainsi, la technique appelée « DLC » permet d'augmenter le niveau de dureté de la surface du ressort 1 et d'améliorer la lubrification de la surface du ressort 1.

De cette manière, le niveau de dureté élevé de la surface du ressort 1 permet de résister au cisaillement induit par le fonctionnement du frein à ressort 14, de limiter l'usure du ressort 1 et, par conséquent, d'éviter la génération de particules abrasives.

En outre, le traitement de surface thermochimique du ressort 1 permet de garantir une meilleure stabilité de frottement d'au moins une spire du ressort 1 sur la surface interne 27 du logement 26 du tambour 23, lors du frottement d'au moins une spire du ressort 1 sur la surface interne 27.

En outre, le durcissement de la surface du ressort 1 permet d'éviter le polissage de la surface du ressort 1, ce polissage pouvant engendrer un comportement instable du frein à ressort 14, et l'apparition de bruit, lors du fonctionnement du frein à ressort 14.

Par ailleurs, la technique appelée « DLC » permet d'obtenir un faible coefficient de frottement au niveau de la surface du ressort 1, de sorte à favoriser un comportement stable du frein à ressort 14 et à limiter l'apparition de bruit, lors du fonctionnement du frein à ressort 14.

En variante, suite à l'étape de galetage, le procédé comprend une étape de traitement de surface mécanique de la surface du ressort 1.

Avantageusement, le traitement de surface mécanique de la surface du ressort 1 est un traitement de surface mécanique appelé « tribofinition ».

La technique dite de « tribofinition » a pour effet de générer des déformations aléatoires de la surface du ressort 1, de sorte à favoriser la lubrification du ressort 1 et la création de réserves d'un lubrifiant, tel que de la graisse, au niveau des zones de contact entre le ressort 1 et la surface interne du logement 26 du tambour 23.

Préférentiellement, l'étape de traitement de surface mécanique de la surface du ressort 1, en particulier dite de « tribofinition », est mise en œuvre en remplacement de l'étape de traitement thermochimique de la surface du ressort 1, en particulier appelée « DLC ».

En variante, suite à l'étape de galetage, le procédé comprend une étape de traitement de surface chimique de la surface du ressort 1.

Avantageusement, le traitement de surface chimique du ressort 1 est un traitement de surface chimique par dépôt. Un tel traitement de surface chimique peut correspondre, par exemple, à un traitement de surface chimique appelé « NiP HP » (acronyme de l'expression Nickel-Phosphore Haut Phosphore).

La technique appelée « NiP HP » consiste à mettre en œuvre un dépôt en couche de Nickel et de Phosphore, par exemple d'une épaisseur de vingt micromètres.

Ainsi, la technique appelée « NiP HP » permet de diminuer la rugosité de la surface du ressort 1 et, par conséquent, de masquer les rainures liées à l'étape d'obtention du ressort 1.

En outre, la technique appelée « NiP HP » permet d'augmenter le niveau de dureté de la surface du ressort 1 et d'améliorer la lubrification de la surface du ressort 1.

Préférentiellement, l'étape de traitement de surface chimique de la surface du ressort 1, en particulier appelée « NiP HP », est mise en œuvre en remplacement de l'étape de traitement thermochimique de la surface du ressort 1, en particulier appelée « DLC ».Une fois toutes les sous-étapes de fabrication susmentionnées effectuées, on met en œuvre le procédé de contrôle de conformité du ressort 1, tel qu'expliqué ci-dessus. L'invention concerne un ressort 1 qui peut être caractérisé comme conforme selon le procédé expliqué ci-dessus, au moins en ce qui concerne la circularité des spires 3i.

Les caractéristiques techniques de chaque variante décrite ci-avant peuvent être utilisées dans les autres variantes pour autant que cela soit techniquement possible.

## Revendications

1. Procédé de fabrication d'un ressort (1) de torsion comprenant un fil (2) comprenant une pluralité de spires (3i) centrées chacune sur un axe de spire (Xi), le ressort de torsion étant conçu pour être monté au sein d'un frein à ressort (14) et pour être en contact de friction radial avec un organe de friction (23) du frein à ressort, le procédé de fabrication comprenant une étape f) de conformation et de découpe comprenant les sous-étapes suivantes :
- f1) conformation en enroulement d'un fil brut (102) selon une pluralité de spires brutes (103), de manière à ce que chaque spire brute soit sensiblement coaxiale avec un axe principal (O1) commun, le fil brut présentant :
o une première portion brute (121) s'étendant à partir d'une première extrémité (120) du fil brut sur au moins une spire brute,
o une deuxième portion brute (123) s'étendant à partir d'une deuxième extrémité (122) du fil brut, opposée à la première extrémité du fil brut sur au moins une spire brute, et
o une portion intermédiaire (125) comprise entre la première portion brute et la deuxième portion brute,
- f2) séparation par découpe de la première portion brute (121) et de la deuxième portion brute (123) du fil brut (102), après la mise en œuvre de la sous-étape f1), la portion intermédiaire (125) devenant alors le fil (2) du ressort de torsion, au moins une portion des spires brutes (103) de la portion intermédiaire (125) devenant les spires (3i) du ressort de torsion (1), et
- f3) conformation par pliage d'une première patte (5), à une première extrémité (104) de la portion intermédiaire (125), après la sous-étape f1) et avant ou après la sous-étape f2), la première patte (5) étant recourbée, la courbure de la première patte correspondant sensiblement à la courbure des spires, et
- f4) conformation par pliage d'une deuxième patte (7), à une deuxième extrémité (106) de la portion intermédiaire opposée à la première extrémité, après la sous-étape f1) et avant ou après la sous-étape f2), la deuxième patte (7) étant recourbée, la courbure de la deuxième patte correspondant sensiblement à la courbure des spires, le ressort de torsion étant conçu pour interagir avec des organes exerçant des couples autour de l'axe principal du ressort, ces couples étant appliqués sur la première patte et sur la deuxième patte.

2. Procédé de fabrication selon la revendication 1, **caractérisé en ce que** la première portion brute (121) s'étend sur 1,25 spire brute et **en ce que** la deuxième portion brute (123) s'étend sur 1,25 spire brute.

3. Procédé de fabrication selon l'une quelconque des revendications 1 ou 2, **caractérisé en ce que** le fil (2) du ressort de torsion formé au cours de l'étape f) définit pour chaque spire (3i), en projection dans un plan de spire (Pi) orthogonal par rapport à l'axe de spire (Xi), un contour de spire extérieur (10) et un contour de spire intérieur (11), **en ce que** le procédé de fabrication comprend en outre une étape g), de mise en œuvre, après l'étape f), d'un procédé de contrôle de conformité du ressort de torsion (1) ainsi formé, ce procédé de contrôle comprenant les étapes suivantes :
- a) définition, pour chaque spire, d'un cercle extérieur de tolérance (15 ; 115) centré sur l'axe de spire (Xi) et tracé dans le plan de spire (Pi), le cercle extérieur de tolérance présentant un rayon extérieur (R15 ; R115), et
- b) définition, pour chaque spire, d'un cercle intérieur de tolérance (16 ; 116) centré sur l'axe de spire (Xi) et tracé dans le plan de spire (Pi), le cercle intérieur de tolérance présentant un rayon intérieur (R16 ; R116) dont la valeur est inférieure à celle du rayon extérieur, d'une valeur d'intervalle de tolérance prédéterminée,
- c) caractérisation de la conformité du ressort de torsion, cette étape de caractérisation comprenant elle-même les sous-étapes suivantes :
o c1) caractérisation du ressort de torsion (1) comme étant conforme, si pour chaque spire (3i), toute portion choisie du contour de spire extérieur (10) est comprise entre le cercle extérieur de tolérance (15) et le cercle intérieur de tolérance (16),
o c2) caractérisation du ressort de torsion comme étant non conforme, si pour au moins une des spires, au moins une portion choisie du contour de spire extérieur dépasse, radialement à l'axe de spire, vers l'extérieur du cercle extérieur de tolérance (15) ou vers l'intérieur du cercle intérieur de tolérance (16) en au moins un point,
ou les sous-étapes suivantes :
∘ c3) caractérisation du ressort de torsion comme étant conforme, si pour chaque spire (3i), toute portion choisie du contour de spire intérieur (11) est comprise entre le cercle extérieur de tolérance (115) et le cercle intérieur de tolérance (116),
∘ c4) caractérisation du ressort de torsion comme étant non conforme, si pour au moins une des spires, au moins une portion choisie du contour de spire intérieur dépasse, radialement à l'axe de spire, vers l'extérieur du cercle extérieur de tolérance (115) ou vers l'intérieur du cercle intérieur de tolérance (116) en au moins un point
le procédé de fabrication comprenant une étape d'intégration du ressort de torsion (1) dans le frein à ressort (14) seulement si le ressort de torsion est caractérisé comme conforme au cours de l'étape g).

4. Procédé de fabrication selon la revendication 3, **caractérisé en ce que** la portion choisie au cours de l'étape g) s'étend sur la totalité de la spire (3i) concernée.

5. Procédé de fabrication selon l'une quelconque des revendications 3 ou 4, **caractérisé en ce que** le ressort de torsion (1) comprend une première portion exclue (18) du fil (2), s'étendant à partir d'une première extrémité (4) du fil, et une deuxième portion exclue (19) du fil, s'étendant à partir d'une deuxième extrémité (6) du fil opposée à la première extrémité, la première portion exclue et la deuxième portion exclue s'étendant chacune seulement sur une portion de spire (3i) du ressort de torsion (1), et **en ce que**, lors de l'étape c) de caractérisation de la conformité du ressort de torsion, on exclut la première portion exclue et la deuxième portion exclue de toute portion choisie.

6. Procédé de fabrication selon l'une quelconque des revendications 3 à 5, **caractérisé en ce que** :
- l'on effectue les sous-étapes c1) et c2) si le fil (2) est configuré pour être en contact de friction radial externe avec l'organe de friction, l'organe de friction constituant de préférence un tambour dans lequel le ressort de torsion est conçu pour être logé, et
- l'on effectue les sous-étapes c3) et c4) si le fil est configuré pour être en contact de friction radial interne avec l'organe de friction, l'organe de friction constituant de préférence un moyeu autour duquel le ressort de torsion est conçu pour être monté.

7. Procédé de fabrication selon l'une quelconque des revendications 3 à 6, **caractérisé en ce que** la valeur d'intervalle de tolérance est comprise entre 0,05 et 0,15 millimètres, de préférence égale à 0,10 millimètres.

8. Procédé de fabrication selon l'une quelconque des revendications 3 à 7, **caractérisé en ce que** l'étape c) est effectuée alors que le ressort de torsion (1) est dans un état libre.

9. Procédé de fabrication selon l'une quelconque des revendications 3 à 8, **caractérisé en ce que** :
- au cours de la sous-étape c1), le ressort de torsion (1) peut être caractérisé comme conforme seulement si au moins une portion choisie d'une courbe directrice externe (30), définie pour chaque spire (3i) du ressort de torsion, est comprise entre deux cylindres de tolérance coaxiaux, et
- au cours de la sous-étape c2), le ressort de torsion peut être caractérisé comme conforme seulement si au moins une portion choisie d'une courbe directrice interne (31), définie pour chaque spire du ressort de torsion, est comprise entre deux cylindres de tolérance coaxiaux.

10. Procédé de fabrication d'un frein à ressort (14), dans lequel on monte un ressort de torsion (1), obtenu à l'aide d'un procédé de fabrication conforme à l'une quelconque des revendications 1 à 9, dans un frein à ressort, le ressort de torsion étant en contact de friction radiale avec un organe de friction (23) du frein à ressort.

11. Frein à ressort (14), comprenant un ressort de torsion (1), le ressort de torsion (1) comprenant un fil (2) enroulé selon une pluralité de spires (3i) centrées chacune sur un axe de spire (Xi), les spires (3i) étant inclues dans une spirale selon laquelle le ressort de torsion est conformé, la spirale étant prévue pour être coaxiale avec un axe principal (O1) du ressort de torsion, le ressort de torsion étant monté au sein du frein à ressort en étant en contact de friction radial avec un organe de friction (23) du frein à ressort, ressort de torsion dans lequel :
- une première partie extrémale du fil (2), laquelle s'étend à partir d'une première extrémité (4) du fil (2), hors de la spirale du ressort de torsion (1), est conformée selon une première patte (5) qui est recourbée, la courbure de la première patte (5) correspondant sensiblement à la courbure des spires,
- une deuxième partie extrémale du fil (2), laquelle s'étend à partir d'une deuxième extrémité (6) du fil (2), hors de la spirale du ressort de torsion (1), est conformée selon une deuxième patte (7) qui est recourbée, la courbure de la deuxième patte (7) correspondant sensiblement à la courbure des spires, le ressort de torsion étant conçu pour interagir avec des organes exerçant des couples autour de l'axe principal du ressort, ces couples étant appliqués sur la première patte et sur la deuxième patte,
- la première patte (5) et la deuxième patte (7) sont chacune dirigée selon une direction sensiblement radiale vers l'intérieur du ressort de torsion (1), et
- en projection dans un plan (P1) orthogonal à l'axe principal (O1), la première patte et la deuxième patte sont recourbées en direction l'une de l'autre.

12. Frein à ressort (14) selon la revendication 11, **caractérisé en ce que** le fil définit pour chaque spire, en projection dans un plan de spire (Pi) orthogonal par rapport à l'axe de spire (Xi), un contour de spire extérieur (10) et un contour de spire intérieur (11), le ressort de torsion (1) étant **caractérisé en ce que**, pour
- des cercles extérieurs de tolérance (15 ; 115), définis pour chaque spire (3i), chaque cercle extérieur de tolérance étant centré sur l'axe de spire (Xi) et tracé dans le plan de spire (Pi), chaque cercle extérieur de tolérance présentant un rayon extérieur (R15 ; R115), et
- des cercles intérieurs de tolérance (16 ; 116), définis pour chaque spire, chaque cercle intérieur de tolérance étant centré sur l'axe de spire et tracé dans le plan de spire, chaque cercle intérieur de tolérance présentant un rayon intérieur (R16 ; R116) dont la valeur est inférieure à celle du rayon extérieur, d'une valeur d'intervalle de tolérance prédéterminée comprise entre 0,05 et 0,15 millimètres, de préférence égale à 0,10 millimètres,
on a :
- toute portion choisie du contour de spire extérieur (10) de chaque spire (3i) qui est comprise entre le cercle extérieur de tolérance (15) et le cercle intérieur de tolérance (16),
ou on a :
- toute portion choisie du contour de spire intérieur (11) de chaque spire qui est comprise entre le cercle extérieur de tolérance (115) et le cercle intérieur de tolérance (116).

13. Frein à ressort (14) selon la revendication 12, **caractérisé en ce que** la portion choisie s'étend sur la totalité de la spire (3i) concernée.

14. Frein à ressort (14) selon l'une des revendications 11 à 13, **caractérisé en ce que** le ressort de torsion (1) est obtenu à l'aide d'un procédé de fabrication conforme à l'une quelconque des revendications 1 à 9.

## Patentansprüche

1. Verfahren zur Herstellung einer Torsionsfeder (1), umfassend einen Draht (2), der eine Mehrzahl von Windungen (3i) umfasst, die jede auf einer Windungsachse (Xi) zentriert sind, wobei die Torsionsfeder eingerichtet ist, um in einem Inneren einer Federbremse (14) montiert zu werden und um in radialem Reibkontakt mit einem Reiborgan (23) der Federbremse zu stehen, wobei das Verfahren zur Herstellung einen Schritt f) zum Formen und zum Abschneiden umfasst, der die folgenden Teilschritte umfasst:
- f1) Formen durch Wickeln eines Rohdrahtes (102) gemäß einer Mehrzahl von Rohwindungen (103), derart, dass jede Rohwindung mit einer gemeinsamen Hauptachse (O1) im Wesentlichen koaxial ist, wobei der Rohdraht aufweist:
o einen ersten Rohteil (121), der sich ausgehend von einem ersten Ende (120) des Rohdrahtes über wenigstens eine Rohwindung erstreckt,
o einen zweiten Rohteil (123), der sich ausgehend von einem zweiten Ende (122) des Rohdrahtes, das zu dem ersten Ende des Rohdrahtes entgegengesetzt ist, über wenigstens eine Rohwindung erstreckt, und
o einen Zwischenteil (125), der zwischen dem ersten Rohteil und dem zweiten Rohteil liegt,
- f2) Trennen durch Abschneiden des ersten Rohteils (121) und des zweiten Rohteils (123) des Rohdrahtes (102), nach dem Durchführen des Teilschrittes f1), wobei der Zwischenteil (125) dann zu dem Draht (2) der Torsionsfeder wird, wobei wenigstens ein Teil der Rohwindungen (103) des Zwischenteils (125) zu den Windungen (3i) der Torsionsfeder (1) wird, und
- f3) Formen durch Umbiegen einer ersten Klaue (5), an einem ersten Ende (104) des Zwischenteils (125), nach dem Teilschritt f1) und vor oder nach dem Teilschritt f2), wobei die erste Klaue (5) gekrümmt ist, wobei die Krümmung der ersten Klaue im Wesentlichen der Krümmung der Windungen entspricht, und
- f4) Formen durch Umbiegen einer zweiten Klaue (7), an einem zweiten Ende (106) des Zwischenteils, das zu dem ersten Ende entgegengesetzt ist, nach dem Teilschritt f1) und vor oder nach dem Teilschritt f2), wobei die zweite Klaue (7) gekrümmt ist, wobei die Krümmung der zweiten Klaue im Wesentlichen der Krümmung der Windungen entspricht, wobei die Torsionsfeder für das Zusammenwirken mit Organen eingerichtet ist, die Drehmomente um die Hauptachse der Feder herum ausüben, wobei diese Drehmomente auf die erste Klaue und auf die zweite Klaue aufgebracht werden.

2. Verfahren zur Herstellung nach Anspruch 1, **dadurch gekennzeichnet, dass** der erste Rohteil (121) sich über 1,25 Rohwindungen erstreckt, und dadurch, dass der zweite Rohteil (123) sich über 1,25 Rohwindungen erstreckt.

3. Verfahren zur Herstellung nach einem der Ansprüche 1 oder 2, **dadurch gekennzeichnet, dass** der Draht (2) der Torsionsfeder, der im Laufe des Schrittes f) gebildet wird, bei jeder Windung (3i), in Projektion in einer Windungsebene (Pi) orthogonal zu der Windungsachse (Xi), eine Windungsaußenkontur (10) und eine Windungsinnenkontur (11) definiert, dadurch, dass das Herstellungsverfahren ferner einen Schritt g) zum Durchführen, nach dem Schritt f), eines Verfahrens zum Überprüfen der Konformität der so gebildeten Torsionsfeder (1) umfasst, wobei das Verfahren zur Überprüfung die folgenden Schritte umfasst:
- a) Definieren, bei jeder Windung, eines äußeren Toleranzkreises (15; 115), der auf der Windungsachse (Xi) zentriert und in der Windungsebene (Pi) gezogen ist, wobei der äußere Toleranzkreis einen äußeren Radius (R15; R115) aufweist, und
- b) Definieren, bei jeder Windung, eines inneren Toleranzkreises (16; 116), der auf der Windungsachse (Xi) zentriert und in der Windungsebene (Pi) gezogen ist, wobei der innere Toleranzkreis einen inneren Radius (R16; R116) aufweist, dessen Wert um einen vorher festgelegten Toleranzbereichswert kleiner ist als der des äußeren Radius,
- c) Charakterisieren der Konformität der Torsionsfeder, wobei der Schritt zum Charakterisieren seinerseits die folgenden Teilschritte umfasst:
o c1) Charakterisieren der Torsionsfeder (1) als konform, wenn bei jeder Windung (3i) jeder beliebige gewählte Teil der Windungsaußenkontur (10) zwischen dem äußeren Toleranzkreis (15) und dem inneren Toleranzkreis (16) liegt,
o c2) Charakterisieren der Torsionsfeder als nicht konform, wenn bei wenigstens einer der Windungen wenigstens ein gewählter Teil der Windungsaußenkontur, radial zu der Windungsachse, in wenigstens einem Punkt, nach außerhalb des äußeren Toleranzkreises (15) oder nach innerhalb des inneren Toleranzkreises (16) übersteht,
oder die folgenden Teilschritte:
∘ c3) Charakterisieren der Torsionsfeder als konform, wenn bei jeder Windung (3i) jeder beliebige gewählte Teil der Windungsinnenkontur (11) zwischen dem äußeren Toleranzkreis (115) und dem inneren Toleranzkreis (116) liegt,
∘ c4) Charakterisieren der Torsionsfeder als nicht konform, wenn bei wenigstens einer der Windungen wenigstens ein gewählter Teil der Windungsinnenkontur, radial zu der Windungsachse, in wenigstens einem Punkt, nach außerhalb des äußeren Toleranzkreises (115) oder nach innerhalb des inneren Toleranzkreises (116) übersteht,
wobei das Herstellungsverfahren einen Schritt des Integrierens der Torsionsfeder (1) in die Federbreme (14) nur dann umfasst, wenn die Torsionsfeder im Laufe des Schrittes g) als konform charakterisiert wird.

4. Verfahren zur Herstellung nach Anspruch 3, **dadurch gekennzeichnet, dass** der im Laufe des Schrittes g) gewählte Teil sich über die Gesamtheit der betreffenden Spirale (3i) erstreckt.

5. Verfahren zur Herstellung nach einem der Ansprüche 3 oder 4, **dadurch gekennzeichnet, dass** die Torsionsfeder (1) einen von dem Draht (2) ausgeschlossenen ersten Teil (18) umfasst, der sich ausgehend von einem ersten Ende (4) des Drahtes erstreckt, und einen von dem Draht ausgeschlossenen zweiten Teil (19) umfasst, der sich ausgehend von einem zweiten Ende (6) des Drahtes, das zu dem ersten Ende entgegengesetzt ist, erstreckt, wobei der ausgeschlossene erste Teil und der ausgeschlossene zweite Teil sich jeder nur über einen Windungsteil (3i) der Torsionsfeder (1) erstrecken, und dadurch, dass bei Schritt c) zum Charakterisieren der Konformität der Torsionsfeder, der ausgeschlossene erste Teil und der ausgeschlossene zweite Teil von jedem beliebigen gewählten Teil ausgeschlossen werden.

6. Verfahren zur Herstellung nach einem der Ansprüche 3 bis 5, **dadurch gekennzeichnet, dass**:
- die Teilschritte c1) und c2) durchgeführt werden, wenn der Draht (2) eingerichtet ist, um in äußerem radialen Reibkontakt mit dem Reiborgan zu stehen, wobei das Reiborgan bevorzugt eine Trommel ist, in der die Torsionsfeder zur Aufnahme eingerichtet ist, und
- die Teilschritte c3) und c4) durchgeführt werden, wenn der Draht eingerichtet ist, um in innerem radialen Reibkontakt mit dem Reiborgan zu stehen, wobei das Reiborgan bevorzugt eine Nabe ist, um die herum die Torsionsfeder zur Montage eingerichtet ist.

7. Verfahren zur Herstellung nach einem der Ansprüche 3 bis 6, **dadurch gekennzeichnet, dass** der Toleranzbereichswert zwischen 0,05 und 0,15 Millimeter beträgt, bevorzugt gleich 0,10 Millimeter ist.

8. Verfahren zur Herstellung nach einem der Ansprüche 3 bis 7, **dadurch gekennzeichnet, dass** der Schritt c) durchgeführt wird, während die Torsionsfeder (1) in einem freien Zustand ist.

9. Verfahren zur Herstellung nach einem der Ansprüche 3 bis 8, **dadurch gekennzeichnet, dass**:
- im Laufe des Teilschrittes c1) die Torsionsfeder (1) nur dann als konform charakterisiert werden kann, wenn wenigstens ein gewählter Teil einer äußeren Leitkurve (30), die bei jeder Windung (3i) der Torsionsfeder definiert ist, zwischen zwei koaxialen Toleranzzylindern liegt, und
- im Laufe des Teilschrittes c2) die Torsionsfeder nur dann als konform charakterisiert werden kann, wenn wenigstens ein gewählter Teil einer inneren Leitkurve (31), die bei jeder Windung der Torsionsfeder definiert ist, zwischen zwei koaxialen Toleranzzylindern liegt.

10. Verfahren zur Herstellung einer Federbremse (14), bei dem eine Torsionsfeder (1), die mittels eines Herstellungsverfahrens nach einem der Ansprüche 1 bis 9 erhalten wird, in einer Federbremse montiert wird, wobei die Torsionsfeder in radialem Reibkonkakt mit einem Reiborgan (23) der Federbremse steht.

11. Federbremse (14), umfassend eine Torsionsfeder (1), wobei die Torsionsfeder (1) einen Draht (2) umfasst, der gemäß einer Mehrzahl von Windungen (3i) gewickelt ist, die jede auf einer Windungsachse (Xi) zentriert sind, wobei die Windungen (3i) in einer Spirale enthalten sind, gemäß der die Torsionsfeder geformt ist, wobei die Spirale vorgesehen ist, um mit einer Hauptachse (O1) der Torsionsfeder koaxial zu sein, wobei die Torsionsfeder im Inneren einer Federbremse (14) montiert ist, indem sie in radialem Reibkontakt mit einem Reiborgan (23) der Federbremse steht, wobei bei der Torsionsfeder:
- ein erster Endteil des Drahtes (2), der sich ausgehend von einem ersten Ende (4) des Drahtes (2), aus der Spirale der Torsionsfeder (1) hinaus, erstreckt, gemäß einer ersten Klaue (5) geformt ist, die gekrümmt ist, wobei die Krümmung der ersten Klaue (5) im Wesentlichen der Krümmung der Windungen entspricht,
- ein zweiter Endteil des Drahtes (2), der sich ausgehend von einem zweiten Ende (6) des Drahtes (2), aus der Spirale der Torsionsfeder (1) hinaus, erstreckt, gemäß einer zweiten Klaue (7) geformt ist, die gekrümmt ist, wobei die Krümmung der zweiten Klaue (7) im Wesentlichen der Krümmung der Windungen entspricht, wobei die Torsionsfeder für das Zusammenwirken mit Organen eingerichtet ist, die Drehmomente um die Hauptachse der Feder herum ausüben, wobei diese Drehmomente auf die erste Klaue und auf die zweite Klaue aufgebracht sind,
- die erste Klaue (5) und die zweite Klaue (7) jede in einer im Wesentlichen radialen Richtung zu dem Inneren der Torsionsfeder (1) hin weisen, und
- in Projektion in einer Ebene (P1) orthogonal zu der Hauptachse (01), die erste Klaue und die zweite Klaue zueinander hin gekrümmt sind.

12. Federbremse (14) nach Anspruch 11, **dadurch gekennzeichnet, dass** der Draht bei jeder Windung, in Projektion in einer Windungsebene (Pi) orthogonal zu der Windungsachse (Xi), eine Windungsaußenkontur (10) und eine Windungsinnenkontur (11) definiert, wobei die Torsionsfeder (1) **dadurch gekennzeichnet ist, dass** sich bei
- äußeren Toleranzkreisen (15; 115), die bei jeder Windung (3i) definiert sind, wobei jeder äußere Toleranzkreis auf der Windungsachse (Xi) zentriert und in der Windungsebene (Pi) gezogen ist, wobei jeder äußere Toleranzkreis einen Außenradius (R15; R115) aufweist, und
- inneren Toleranzkreisen (16; 116), die bei jeder Windung definiert sind, wobei jeder innere Toleranzkreis auf der Windungsachse zentriert und in der Windungsebene gezogen ist, wobei jeder innere Toleranzkreis einen Innenradius (R16; R116) aufweist, dessen Wert um einen vorher festgelegten Toleranzbereichswert kleiner ist als der des äußeren Radius, der zwischen 0,05 und 0,15 Millimeter beträgt, bevorzugt gleich 0,10 Millimeter ist,
Folgendes ergibt:
- jeder beliebige gewählte Teil der Windungsaußenkontur (10) jeder Windung (3i) liegt zwischen dem äußeren Toleranzkreis (15) und dem inneren Toleranzkreis (16),
oder Folgendes ergibt:
- jeder beliebige gewählte Teil der Windungsinnenkontur (11) jeder Windung liegt zwischen dem äußeren Toleranzkreis (115) und dem inneren Toleranzkreis (116).

13. Federbremse (14) nach Anspruch 12, **dadurch gekennzeichnet, dass** der gewählte Teil sich über die Gesamtheit der betreffenden Spirale (3i) erstreckt.

14. Federbremse (14) nach einem der Ansprüche 11 bis 13, **dadurch gekennzeichnet, dass** die Torsionsfeder (1) mittels eines Herstellungsverfahrens nach einem der Ansprüche 1 bis 9 erhalten ist.

## Claims

1. Method of manufacturing a torsion spring (1) comprising a wire (2) comprising a plurality of turns (3i) wherein each turn is centered on a turn axis (Xi), while the torsion spring is designed to be mounted within a spring brake (14) and to be in radial frictional contact with a friction member (23) of the spring brake, wherein the manufacturing method comprises a step f) of conformation and cutting comprising the following substeps:
- f1) winding conformation of a raw wire (102) according to a plurality of raw turns (103), so that each raw turn is substantially coaxial with a common main axis (O1), wherein the raw wire has:
o a first raw portion (121) extending from a first end (120) of the raw wire over at least one raw turn,
o a second raw portion (123) extending from a second end (122) of the raw wire, opposite the first end of the raw wire over at least one raw turn, and
o an intermediate portion (125) between the first raw portion and the second raw portion,
- f2) separation by cutting the first raw portion (121) and the second raw portion (123) of the raw wire (102) after the implementation of the substep f1), wherein the intermediate portion (125) then becomes the wire (2) of the torsion spring, and wherein at least a portion of the raw turns (103) of the intermediate portion (125) become the turns (3i) of the torsion spring (1), and
- f3) conformation by folding of a first tab (5) at a first end (104) of the intermediate portion (125) after the substep f1) and before or after the substep f2), the first tab (5) being curved, the curvature of the first tab corresponding substantially to the curvature of the turns, and
- f4) conformation by folding of a second tab (7) at a second end (106) of the intermediate portion opposite the first end, after the substep f1) and before or after the substep f2), the second tab (5) being curved, the curvature of the second tab corresponding substantially to the curvature of the turns, the torsion spring being designed to interact with members exerting torques around the main axis of the spring, the torques being applied to the first tab and to the second tab.

2. Manufacturing method according to claim 1, **characterized in that** the first raw portion (121) extends over 1.25 raw turns and **in that** the second raw portion (123) extends over 1.25 raw turns.

3. Manufacturing method according to any one of the claims 1 or 2, **characterized in that** the wire (2) of the torsion spring formed during step f) defines for each turn (3i) in projection in a turn plane (Pi) orthogonal with respect to the turn axis (Xi), an outer turn contour (10) and an inner turn contour (11), and **in that** the manufacturing method further comprises a step g) that is implemented after step f), of a method of checking compliance of the torsion spring (1) thus formed, wherein this control method comprises the following steps:
a) defining, for each turn, an outer tolerance circle (15; 115) centered on the turn axis (Xi) and drawn in the turn plane (Pi), wherein the outer tolerance circle has an outer radius (R15; R115), and
b) defining, for each turn, an inner tolerance circle (16; 116) centered on the turn axis (Xi) and drawn in the turn plane (Pi), wherein the inner tolerance circle has an inner radius (R16; R116), whose value is less than that of the outer radius, of a predetermined tolerance interval value,
c) characterizing the conformity of the torsion spring, wherein this characterization step itself comprises the following substeps:
o c1) characterizing the torsion spring (1) as being compliant if for each turn (3i), each selected portion of the outer turn contour (10) lies between the outer tolerance circle (15) and the inner tolerance circle (16),
o c2) characterization of the torsion spring as being non-compliant, if for at least one of the turns, at least one selected portion of the outer turn contour protrudes, radially with respect to the turn axis, outwards of the outer tolerance circle (15) or inwards of the inner tolerance circle (16) in at least one point,
or the following substeps:
∘ c3) characterization of the torsion spring as being compliant, if for each turn (3i), any selected portion of the inner turn contour (11) is between the outer tolerance circle (115) and the inner tolerance circle (116),
∘ c4) characterization of the torsion spring as being non-compliant, if for at least one of the turns, at least a selected portion of the inner turn contour protrudes radially outwards from the outer tolerance circle (115 ) or towards the inside the inner tolerance circle (116) in at least one point
wherein the manufacturing method comprises a step of integrating the torsion spring (1) into the spring brake (14) only if the torsion spring is characterized as being compliant in step g).

4. Manufacturing method according to claim 3, **characterized in that** the portion chosen during step g) extends over the entire turn (3i) in question.

5. Manufacturing method according to any one of the claims 3 or 4, **characterized in that** the torsion spring (1) comprises a first excluded portion (18) of the wire (2), extending from a first end (4) of the wire, and a second excluded portion (19) of the wire, extending from a second end (6) of the wire opposite the first end, wherein the first excluded portion and the second excluded portion each extend only over a portion of the turn (3i) of the torsion spring (1), and **in that** in step c) of characterizing the compliance of the torsion spring by excluding the first excluded portion and the second excluded portion of any chosen portion.

6. Manufacturing method according to any one of the claims 3 to 5, **characterized in that**:
- the sub-steps c1) and c2) are carried out if the wire (2) is designed to be in external radial frictional contact with the friction member, wherein the friction member preferably constitutes a drum in which the torsion spring is designed to be housed, and
- the sub-steps c3) and c4) are carried out if the wire is designed to be in contact with the friction member with internal radial friction, wherein the friction element preferably constitutes a hub around which the torsion spring is designed to be mounted.

7. Manufacturing method according to any one of the claims 3 to 6, **characterized in that** the tolerance range value is between 0.05 and 0.15 millimeters, preferably equal to 0.10 millimeters.

8. Manufacturing method according to any one of the claims 3 to 7, **characterized in that** step c) is performed while the torsion spring (1) is in a free state.

9. Manufacturing method according to any one of the claims 3 to 8, **characterized in that**:
- during the sub-step c1), the torsion spring (1) may be characterized as being compliant only if at least one selected portion of an external guide curve (30), defined for each turn (3i) of the torsion spring, is included between two coaxial tolerance cylinders, and
- during the sub-step c2), the torsion spring may be characterized as being compliant only if at least one selected portion of an internal guide curve (31), defined for each turn of the torsion spring, is between two coaxial tolerance cylinders .

10. Method of manufacturing a spring brake (14), wherein a torsion spring (1), obtained by means of a manufacturing method according to any one of the claims 1 to 9, is mounted in a spring brake, wherein the torsion spring is in radial frictional contact with a friction member (23) of the spring brake.

11. Spring brake (14), comprising a torsion spring (1), wherein the torsion spring (1) comprises a wire (2) wound in a plurality of turns (3i) each of which is centered on a turn axis (Xi), wherein the turns (3i) are included in a spiral according to which the torsion spring is shaped, and the spiral is intended to be coaxial with a main axis (O1) of the torsion spring, wherein the torsion spring is mounted within the spring brake and in radial frictional contact with a friction member (23) of the spring brake, a torsion spring wherein:
- a first end portion of the wire (2), which extends from a first end (4) of the wire (2), out of the spiral of the torsion spring (1), is shaped as a first tab (5), which is curved, the curvature of the first tab corresponding substantially to the curvature of the turns,
- a second end portion of the wire (2), which extends from a second end (6) of the wire (2), out of the spiral of the torsion spring (1), is shaped as a second tab (7), which is curved, the curvature of the second tab corresponding substantially to the curvature of the turns, the torsion spring being designed to interact with members exerting torques around the main axis of the spring, the torques being applied to the first tab and to the second tab,
- the first tab (5) and the second tab (7) are each directed in a substantially radial direction towards the inside of the torsion spring (1), and
- in projection in a plane (P1) orthogonal to the main axis (O1), the first tab and the second tab are curved towards each other.

12. Spring brake (14) according to claim 11, **characterized in that** the wire defines for each turn, in projection in a turn plane (Pi) orthogonal to the turn axis (Xi), an outer coil contour (10) and an inner coil contour (11), wherein the torsion spring (1) is **characterized in that**,
- for outer tolerance circles (15; 115) defined for each turn (3i), each outer tolerance circle is centered on the turn axis (Xi) and drawn in the turn plane (Pi), wherein each outer tolerance circle has an outer radius (R15; R115), and
- for inner tolerance circles (16; 116) defined for each turn, each inner tolerance circle is centered on the turn axis and drawn in the turn plane, each inner tolerance circle has an inner radius (R16; R116) whose value is less than that of the outer radius with a predetermined tolerance interval value of between 0.05 and 0.15 millimeters, preferably equal to 0.10 millimeters,
wherein:
- any selected portion of the outer turn contour (10) of each turn (3i) lies between the outer tolerance circle (15) and the inner tolerance circle (16),
or wherein:
- any chosen portion of the inner turn contour (11) of each turn lies between the outer tolerance circle (115) and the inner tolerance circle (116).

13. Spring brake (14) according to claim 12, **characterized in that** the selected portion extends over the entire turn (3i) in question.

14. Spring brake (14) according to one of the claims 11 to 13, **characterized in that** the torsion spring (1) is obtained using a manufacturing method according to any one of the claims 1 to 9.
